(19) Europäisches Patentamt
European Patent Office
Office européen des brevets

(11) **EP 1 938 613 B1**

(12) **EUROPEAN PATENT SPECIFICATION**

(45) Date of publication and mention
of the grant of the patent:
**17.11.2010 Bulletin 2010/46**

(21) Application number: **06815727.0**

(22) Date of filing: **27.09.2006**

(51) Int Cl.:
***H04N 7/26*** *(2006.01)*

(86) International application number:
**PCT/US2006/037943**

(87) International publication number:
**WO 2007/038696 (05.04.2007 Gazette 2007/14)**

(54) **METHOD AND APPARATUS FOR USING RANDOM FIELD MODELS TO IMPROVE PICTURE AND VIDEO COMPRESSION AND FRAME RATE UP CONVERSION**

VERFAHREN UND VORRICHTUNG ZUR VERWENDUNG VON ZUFALLSFELDMODELLEN ZUR VERBESSERUNG DER BILD- UND VIDEOKOMPRIMIERUNG UND BILDFREQUENZ-AUFWÄRTSUMSETZUNG

METHODE ET APPAREIL POUR UTILISER DES MODELES DE CHAMP ALEATOIRES DANS LE BUT D'AMELIORER UNE COMPRESSION DE DONNEES D'IMAGES ET DE DONNEES VIDEO, ET UNE CONVERSION POSITIVE DE CADENCE DE PRISE DE VUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.09.2005 US 721374 P**
**10.02.2006 US 772158 P**
**23.08.2006 US 509213**

(43) Date of publication of application:
**02.07.2008 Bulletin 2008/27**

(73) Proprietor: **Qualcomm Incorporated**
**San Diego, CA 92121 (US)**

(72) Inventors:
• **OGUZ, Seyfullah Halit**
**San Diego, California 92122 (US)**
• **RAVEENDRAN, Vijayalakshmi, R.**
**San Diego, California 92130 (US)**

(74) Representative: **Catesby, Olivia Joanne et al**
**Tomkins & Co**
**5 Dartmouth Road**
**Dublin 6 (IE)**

(56) References cited:
**WO-A1-2005/022918     US-B1- 6 490 320**

• **KERVRANN C ET AL: "A MARKOV RANDOM FIELD MODEL-BASED APPROACH TO UNSUPERVISED TEXTURE SEGMENTATION USING LOCAL AND GLOBAL SPATIAL STATISTICS" IEEE TRANSACTIONS ON IMAGE PROCESSING, IEEE SERVICE CENTER, PISCATAWAY, NJ, US, vol. 4, no. 6, 1 June 1995 (1995-06-01), pages 856-862, XP000533949 ISSN: 1057-7149**
• **VETRO A ET AL: "Joint shape and texture rate control for MPEG-4 encoders" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, vol. 5, 31 May 1998 (1998-05-31), pages 285-288, XP010289885 ISBN: 0-7803-4455-3**
• **ANTHONY VETRO ET AL: "MPEG-4 Rate Control for Multiple Video Objects" IEEE TRANSACTIONS ON CIRCUITS AND SYSTEMS FOR VIDEO TECHNOLOGY, IEEE SERVICE CENTER, PISCATAWAY, NJ, US, vol. 9, no. 1, February 1999 (1999-02), XP011014547 ISSN: 1051-8215**

**EP 1 938 613 B1**

- CHIH-CHENG HUNG ET AL: "Experiments on image texture classification with K-views classifier, Markov random fields and cooccurrence probabilities" GEOSCIENCE AND REMOTE SENSING SYMPOSIUM, 2004. IGARSS '04. PROCEEDINGS. 2004 IEEE INTERNATIONAL ANCHORAGE, AK, USA 20-24 SEPT. 2004, PISCATAWAY, NJ, USA,IEEE, vol. 6, 20 September 2004 (2004-09-20), pages 3818-3821, XP010751585 ISBN: 0-7803-8742-2

- XIANWU HUANG ET AL: "A novel moving object segmentation algorithm based on spatiotemporal Markov random field" VLSI DESIGN AND VIDEO TECHNOLOGY, 2005. PROCEEDINGS OF 2005 IEEE INTERNATIONAL WORKSHOP ON SUZHOU, CHINA MAY 28-30, 2005, PISCATAWAY, NJ, USA,IEEE, 28 May 2005 (2005-05-28), pages 320-323, XP010833380 ISBN: 0-7803-9005-9

**Description**

**BACKGROUND**

**Field**

The invention relates to picture and video compression. More particularly, the invention relates to methods and apparatus for using random field models to improve picture and video compression and frame rate up conversion.

**Background**

Digital products and services such as digital cameras, digital video recorders, satellite broadcast digital television (DTV) services and video streaming are becoming increasingly popular. Due to the limitations in digital data/information storage capacities and shared transmission bandwidths, a greater need has arisen to compress digital pictures and video frames for the efficient storage and transmission of digital pictures and video frames. For these reasons, many standards for the encoding and decoding of digital pictures and digital video signals have been developed. For example, the International Telecommunication Union (ITU) has promulgated the H.261, H.262, H.263 and H.264 standards for digital video encoding. Also, the International Standards Organization (ISO) through its expert study group Motion Picture Experts Group (MPEG) has promulgated the video compression related parts of the standards MPEG-1, MPEG-2 and MPEG-4 for digital video encoding. For example, MPEG-2 Video is currently the standard encoding technique used for digital television broadcast over satellite, terrestrial or cable transmission links. In the field of digital picture compression, the Joint Photographic Experts Group (JPEG), jointly established between ISO and ITU, has promulgated the JPEG and JPEG 2000 standards.

These standards specify the syntax of encoded digital video signals and how these signals are to be decoded for presentation or playback. However, these standards permit various different techniques (e.g., algorithms or compression tools) to be used in a flexible manner for transforming the digital video signals from an uncompressed format to a compressed or encoded format. Hence, many different digital video signal encoders are currently available. These digital video signal encoders are capable of achieving varying degrees of compression at varying quality levels. The compression techniques provisioned by contemporary standards and employed by current encoders are most suitable for the compression of non-textured objects and images.

Pictures and video frames, however, often include textured visual objects and regions that exhibit considerable detail across a multitude of scales. Examples of these objects include grass, flowers, leaves, water, and so on. In conjunction with slight changes in illumination conditions and/or small amounts of motion (i.e., position change), the precise fine details of these objects vary although their higher-level impression stays the same. Each of these objects can be referred to as a texture, which can be considered a stochastic, possibly periodic, two-dimensional pixel field (e.g., a portion of a picture or video frame) that shows rapid variations in terms of brightness (Y) and/or color (U, V) in small spatial neighborhoods (e.g., within a few pixels). The above compression algorithms are not very efficient at compressing textures.

For these reasons as well as others, a need exists for methods and systems for the efficient compression of visual objects and regions that include texture. US-B1-6 490 320 teaches that in an apparatus for transcoding a compressed video, a generator simulates constraints of a network and constraints of a user device. A classifier is coupled to receive an input compressed video and the constraints. The classifier generates content information from features of the input compressed video. A manager produces a plurality of conversions modes dependent the constraints and content information, and a transcoder produces output compressed videos, one for each of the plurality conversion modes.

**SUMMARY**

A method of processing multimedia data comprising segmenting data into a plurality of partitions, assigning each of the plurality of partitions to one of a plurality of categories comprising a first category and a second category, encoding the plurality of partitions assigned to the first category using an algorithm and encoding the plurality of partitions assigned to the second category using a texture model.

An apparatus for processing multimedia data comprising a segmenting module configured to segment data into a plurality of partitions, an assignment module configured to assign each of the plurality of partitions to one of a plurality of categories comprising a first category and a second category and an encoder configured to encode the plurality of partitions assigned to the first category using an algorithm and the plurality of partitions assigned to the second category using a texture model.

A method of processing multimedia data comprising decoding a plurality of first partitions belonging to a first category using an algorithm, decoding a plurality of second partitions belonging to a second category using a texture model and creating multimedia data using boundary information, the plurality of first partitions and the plurality of second partitions.

An apparatus for processing multimedia data comprising a decoder configured to decode a plurality of first partitions belonging to a first category using an algorithm and a plurality of second partitions belonging to a second category using a texture model and a production module configured to create multimedia data using boundary information, the plurality of first partitions and the plurality of second partitions.

## BRIEF DESCRIPTION OF THE DRAWINGS

The features, objects, and advantages of the invention will become more apparent from the detailed description set forth below when taken in conjunction with the drawings, wherein:

FIG. 1 is a block diagram of a system for transmitting and receiving pictures and video frames according to an embodiment of the invention;

FIG. 2 is a block diagram of a system for transmitting and receiving pictures and video frames according to an embodiment of the invention;

FIG. 3 is a flow chart illustrating a method of encoding pictures and video frames according to an embodiment of the invention;

FIGS. 4A, 4B, and 4C are examples of an 8 connected neighborhood, a 4 connected neighborhood, and an oblique neighborhood for the definition of Markov Random Fields according to several embodiments of the invention;

FIG. 5 is a picture illustrating four different realizations of a MRF model where each realization includes a different neighborhood definition according to several embodiments of the invention;

FIG. 6 is a flow chart illustrating a method of decoding pictures and video frames according to an embodiment of the invention;

FIG. 7 is a block diagram of an apparatus for processing multimedia data according to an embodiment of the invention;

FIG. 8 is a block diagram of an apparatus for processing multimedia data according to an embodiment of the invention;

FIG. 9 is a block diagram illustrating exemplary components for the means for apparatus for processing multimedia data; and

FIG. 10 is a block diagram illustrating exemplary components for the means for apparatus for processing multimedia data.

## DETAILED DESCRIPTION

Methods and systems that implement the embodiments of the various features of the invention will now be described with reference to the appended claims and to the drawings. The drawings and the associated descriptions are provided to illustrate embodiments of the invention and not to limit the scope of the invention. Reference in the specification to "one embodiment" or "an embodiment" is intended to indicate that a particular feature, structure, or characteristic described in connection with the embodiment is included in at least an embodiment of the invention. The appearances of the phrase "in one embodiment" or "an embodiment" in various places in the specification are not necessarily all referring to the same embodiment. Throughout the drawings, reference numbers are re-used to indicate correspondence between referenced elements. In addition, the first digit of each reference number indicates the figure in which the element first appears.

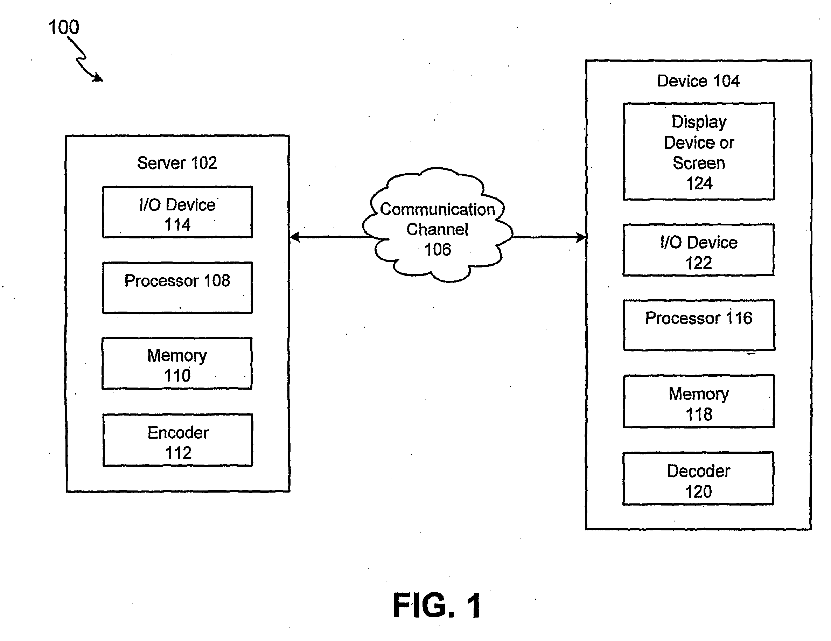

FIG. 1 is a block diagram of a system 100 for transmitting and receiving video data (e.g., pictures and video frames). The system 100 may also be used to encode (e.g., compress) and decode (e.g., decompress) pictures and video frames. The system 100 may include a server 102, a device 104, and a communication channel 106 connecting the server 102 to the device 104. The system 100 is an exemplary system used to illustrate the methods described below for encoding and decoding pictures and video frames. The system 100 may be implemented in hardware, software, and combinations thereof. One skilled in the art will appreciate that other systems can be used in place of system 100 while still maintaining the scope of the invention.

The server 102 may include a processor 108, a memory 110, an encoder 112, and an I/O device 114 (e.g., a transceiver). The server 102 may include one or more processors 108, one or more memories 110, one or more encoders 112, and one or more I/O devices 114 (e.g., a transceiver). The processor 108 and/or the encoder 112 may be configured to receive pictures and video data in the form of a series of video frames. The processor 108 and/or the encoder 112 may transmit the pictures and the series of video frames to the memory 110 for storage and/or may compress the pictures and the series of video frames. The memory 110 may also store computer instructions that are used by the processor 108 and/or the encoder 112 to control the operations and functions of the server 102. The encoder 112, using computer instructions received from the memory 110, may be configured to perform both parallel and serial processing (e.g.,

compression) of the series of video frames. The computer instructions may be implemented as described in the methods below. Once the series of frames are encoded, the encoded data may be sent to the I/O device 114 for transmission to the device 104 via the communication channel 106.

The device 104 may include a processor 116, a memory 118, a decoder 120, an I/O device 122 (e.g., a transceiver), and a display device or screen 124. The device 104 may include one or more processors 116, one or more memories 118, one or more decoders 120, one or more I/O devices 122 (e.g., a transceiver), and one or more display devices or screens 124. The device 104 may be a computer, a digital video recorder, a handheld device (e.g., a cell phone, Blackberry, etc.), a set top box, a television, and other devices capable of receiving, processing (e.g., decompressing) and/or displaying a series of video frames. The I/O device 122 receives the encoded data and sends the encoded data to the memory 118 and/or to the decoder 120 for decompression. The decoder 120 is configured to reproduce the pictures and/or the series of video frames using the encoded data. Once decoded, the pictures and/or the series of video frames can be stored in the memory 118. The decoder 120, using computer instructions retrieved from the memory 118, may be configured to perform both parallel and serial processing (e.g., decompression) of the encoded data to reproduce the pictures and/or the series of video frames. The computer instructions may be implemented as described in the methods below. The processor 116 may be configured to receive the pictures and/or the series of video frames from the memory 118 and/or the decoder 120 and to display the pictures and/or the series of video frames on the display device 124. The memory 118 may also store computer instructions that are used by the processor 116 and/or the decoder 120 to control the operations and functions of the device 104.

The communication channel 106 may be used to transmit the encoded data between the server 102 and the device 104. The communication channel 106 may be a wired network and/or a wireless network. For example, the communication channel 106 can include the Internet, coaxial cables, fiber optic lines, satellite links, terrestrial links, wireless links, and other media capable of propagating signals.

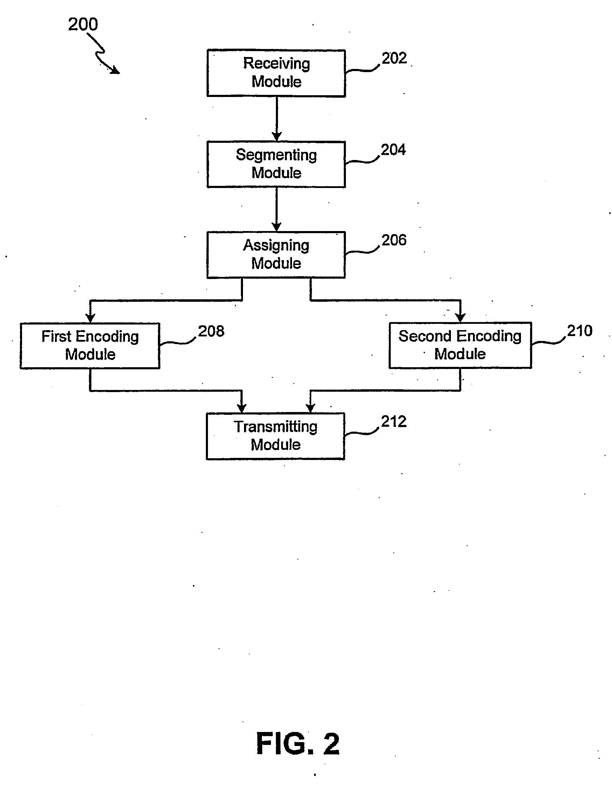

FIG. 2 is a block diagram of a system 200 for transmitting and receiving pictures and video frames. The system 200 may also be used to encode (e.g., compress) and decode (e.g., decompress) pictures and video frames. The system 200 may include a receiving module 202, a segmenting module 204, an assigning module 206, a first encoding module 208, a second encoding module 210, and a transmitting module 212. The modules shown in FIG. 2 can be part of one or more of the devices shown in FIG. 1. For example, the receiving module 202 and the transmitting module 212 can be part of the I/O devices 114 and 122. Also, the segmenting module 204, the assigning module 206, the first encoding module 208, and the second encoding module 210 can be part of the encoder 112. The system 200 is an exemplary system used to illustrate the methods described below for encoding and decoding pictures and video frames. The system 200 may be implemented in hardware, software, and combinations thereof. One skilled in the art will appreciate that other systems can be used in place of system 200 while still maintaining the scope of the invention.

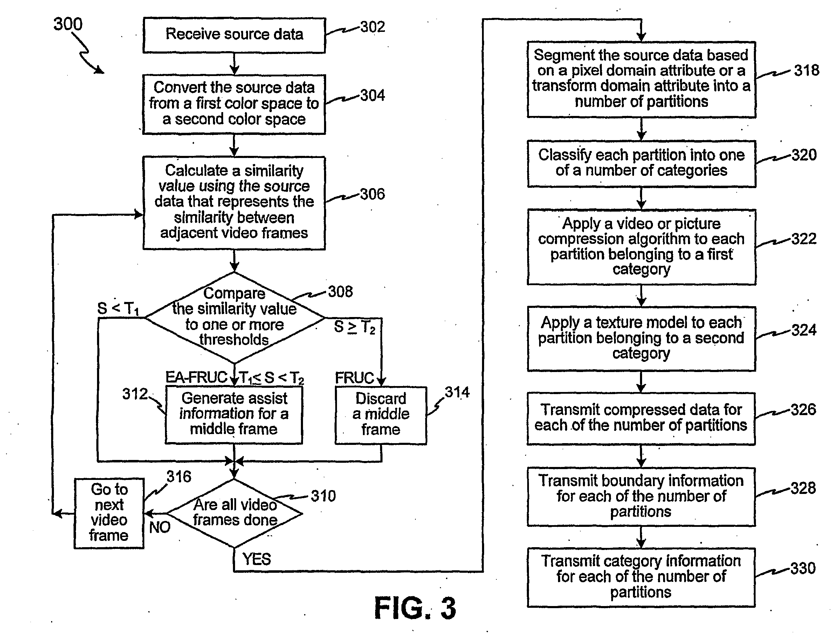

FIG. 3 is a flow chart illustrating a method 300 of encoding multimedia data (e.g., audio, video, images, etc.). The video is generally made up of a number of video frames and each picture and video frame is made up of a number of pixels. Each pixel can be represented by a number of bits (e.g., 24 bits) where, for example, 8 bits represent a red color component, 8 bits represent a green color component, and 8 bits represent a blue color component. The number of pixels used to represent each picture and/or video frame depends on the resolution (e.g., high definition) of the picture and/or video frame. The number of bits used to represent each pixel depends on the fidelity (e.g., high fidelity) of the picture or video frame. The complete set of bits used to represent one or more pictures or video frames can be referred to as the source data bits. For purposes of this disclosure, the term video frame may be used to describe a picture and/or a frame of a video.

The encoder 112 receives the source data bits (step 302) and converts the source data from a first color space (e.g., RGB) to a second color space (e.g., YUV or YCbCr) (step 304). A color space is generally made up of three color components. Several color spaces, color space conversion algorithms and matrices exist in the art to perform the conversion from the first color space to the second color space. An example of a color space conversion matrix is:

$$\begin{bmatrix} Y \\ U \\ V \end{bmatrix} = \begin{bmatrix} 0.299 & 0.587 & 0.114 \\ -0.147 & -0.289 & 0.436 \\ 0.615 & -0.515 & -0.100 \end{bmatrix} \begin{bmatrix} R \\ G \\ B \end{bmatrix}$$

The conversion from the first color space to the second color space allows the source data bits to be in a better form for compression.

The encoder 112 may analyze the source data to determine whether similarities or redundancies exist between adjacent video frames (step 306). The encoder 112 usually compares a video frame (sometimes referred to as a middle video frame) with its prior and subsequent video frames for similarities or redundancies. For example, frame 3 may be compared to frame 2 and frame 4 for similarities. Depending on the similarities, redundancies, and/or capabilities of the decoder 120, the encoder 112 may perform a frame rate up conversion (FRUC) or an encoder-assisted frame rate up conversion (EA-FRUC) processing on the source data bits.

The encoder 112 can calculate or produce a similarity value (S) to determine the similarity between adjacent frames. The similarity value can be computed using, for example, the Y components of pixels of the source data. The similarity value can be represented as $S(Y_2, Y_3, Y_4)$ where $Y_2$ is a matrix of pixel (luminance/brightness) values belonging to a prior frame, $Y_3$ is a matrix of pixel (luminance/brightness) values belonging to a middle or target frame, and $Y_4$ is a matrix of pixel (luminance/brightness) values belonging to a subsequent frame. One example of a method of producing a similarity value is using a sum of absolute differences (SAD) algorithm. Another example of a method of producing a similarity value is using a motion compensated SAD (MCSAD) algorithm.

The similarity metric S(.) may take into account more than one prior frames such as $\{..., Y_{-1}, Y_0, Y_1, Y_2\}$ and likewise it may take into account more than one subsequent frames such as $\{Y_4, Y_5, Y_6, ...\}$. Such multi-frame analysis (in particular in the causal direction) is more consistent with the state-of-the-art video compression technologies and may improve temporal segmentation performance and accuracy.

The similarity metric S(.) may take into account one or more or all of the color space dimensions with respect to which the video signal is represented. Such multidimensional analysis may improve temporal segmentation performance and accuracy.

The similarity metric S(.) may return a scalar or vector valued similarity measure. A vector valued similarity measure may have multiple scalar components. For example, in one embodiment, each of these scalar components may reflect similarity values between different pairs of frames, one typically being the current frame (middle or target frame) and the other being a frame from the prior neighbors' list or the subsequent neighbors' list. In one embodiment, the multiple scalar components of a vector valued similarity measure may reflect similarity values calculated with respect to different color space dimensions.

The sequence of similarity metric values may be processed by the encoder 112. The encoder 112 may input the sequence of values into an analysis module. The analysis module may be part of the processor 108 and/or the encoder 112. The analysis module may in general utilize a non-causal window of time-varying size to process a subset or all of the similarity metric values provided, for each frame to make (1) a temporal segmentation decision such as scene-change/shot-boundary or not, or (2) an encoding mode decision such as regular encoding, or encoder-assisted frame interpolation (EA_FRUC) or skip (decoder only frame interpolation, FRUC), or (3) both.

The analysis module may utilize a perceptual model (Human Visual System model). The analysis module may also use recursive analysis techniques implying a system with memory where the current state is a function of the history of previous inputs to the analysis module. The analysis module may also use iterative analysis techniques implying that each new frame's decision is not necessarily final but may be revisited and updated later again on the basis of new or updated understanding of similarity metric evolution. The analysis module may also apply filtering or other mappings to the similarity metric values input to it. In one embodiment, the analysis module may map similarity metric values to some dissimilarity measure.

In one embodiment, the encoder 112 may compare the similarity value to one or more thresholds (step 308). If the similarity value is less than a first threshold (T1) then the adjacent frames are not similar (go to step 310). Using the example above, frame 3 is not similar to frame 2 or 4 or both. If the similarity value is equal to or greater than the first threshold (T1) and less than a second threshold (T2) then the adjacent frames are similar (go to step 312). Using the example above, frame 3 is similar to frames 2 and 4. If the similarity value is equal to or greater than the second threshold (T2) then the adjacent frames are very similar (go to step 314). Using the example above, frame 3 is very similar to frames 2 and 4. One way the encoder 112 keeps track of the ordering or sequence of the video frames is to put a time stamp or frame number on each video frame.

In one embodiment, the encoder 112 may utilize static or dynamic (adaptive) probability models on sequences (vectors) of similarity metric values to formulate the analysis task as a formal hypothesis testing problem. This enables optimal (in a statistical sense) decision making for temporal segmentation or encoding modes. The analysis module utilized by the encoder 112 may be based on many-valued (fuzzy) logic principles rather than the common Boolean logic, with respect to the nature of its decision output. This enables higher fidelity information preservation and more accurate representation of complex (both temporally and spatially) video frame dynamics.

At step 310, the encoder 112 increments a frame counter by 1 to move to the next frame. Using the example above, the middle frame becomes frame 4.

At step 312, the encoder 112 performs an EA-FRUC. For EA-FRUC, the encoder 112 is aware of the frame interpolation algorithm running at the decoder 120. When adjacent video frames are similar, rather than sending repetitive data from adjacent video frames, the encoder 112 generates assist information for or retrieves assist information from the target frame, i.e., the middle frame (step 312). The assist information enhances the quality of and/or reduces the computational complexity of the interpolation process performed by the decoder 120. With the assist information, the encoder 112 does not have to send the data for the entire target frame, but needs to send the assist information to the decoder 120 for reconstruction of the target frame. Hence, the assist information allows the decoder 120 to recreate the target video frame with minimal data, i.e., using the assist information.

At step 314, the encoder 112 performs a FRUC triggering frame dropping operation. FRUC enables interpolation of partial or entire video frames at the device 104. When adjacent video frames are very similar, rather than sending repetitive/redundant data from adjacent video frames, the encoder 112 discards or removes the target frame from being sent to the decoder 120 (step 314). FRUC can be used for different purposes such as increasing compression efficiency through totally avoiding transmitting any data for a select subset of video frames when this is feasible or for error concealment when the compressed data for extended portions of video frames or for entire video frames are lost due to channel impairments. In either case, the device 104, using its local resources and available information from other already received frames, interpolates the (partially or fully) missing video frames. With FRUC, the device 104 receives no augmenting / auxiliary data for the video frames to be interpolated. Classification processing for EA-FRUC and FRUC is generally performed on all the video frames (steps 310 and 316).

The encoder 112 performs a scene analysis on the video frames based on one or more pixel domain attributes (e.g., one or more color channels) or transform domain attributes (e.g., block classification based on DC coefficient value and AC coefficient power in predefined subbands) to temporally or spatially segment the video frames and identify regions on the video frames that can be accurately described as textures (step 318). If the second color space (step 304) is YUV, the one color channel is preferably Y. The encoder 112 may segment the source data based on at least one color channel (i.e., color space component) into a number of partitions or regions. Each partition or region can have an arbitrary, random or specific size such as nxn pixels or mxn pixels, where m and n are integers, or an arbitrary, random or specific shape, such as a cloud or square shape. Each partition or region can have a different arbitrary, random or specific size and/or shape.

The encoder 112 may adopt a feature vector including transform domain attributes of the source data such as the DC coefficient value resulting from the Discrete Cosine Transform, DCT, of an 8x8 pixel block, and the total signal power within predefined subbands, i.e., within predefined subsets of AC coefficients resulting from the same (DCT) transform of the same 8x8 pixel block. These subbands may, for example, correspond to pure horizontal frequencies, i.e., vertical edges, pure vertical frequencies, i.e., horizontal edges, oblique edges, and more texture-like spatial frequency patterns. The encoder may calculate/generate this feature vector for each 8x8 pixel block in the source data and use a data clustering algorithm in the feature space to classify each 8x8 pixel block into one of a number of partitions or regions.

Several different segmentation algorithms (e.g., spatial and/or temporal) can be used to segment the source data. Spatial segmentation can be used for pictures and video frames and temporal segmentation can also be used for video frames. If both spatial and temporal segmentation are used for video frames, spatial segmentation is generally performed prior to temporal segmentation since results of spatial segmentation can be used as a cue for temporal segmentation.

Spatial segmentation involves dividing a picture or video frame into a number of partitions. In spatial segmentation, one partition does not overlap another partition; however, the union of all partitions covers the entire picture or video frame. In one embodiment, the segmentation involves dividing the picture or video frame into a number of arbitrarily shaped and sized partitions. Several spatial segmentation algorithms that divide a picture or video frame into a number of arbitrarily shaped and sized partitions exist in the art such as those described in C. Pantofaru and M. Hebert, "A Comparison of Image Segmentation Algorithms," tech. report CMU-RI-TR-05-40, Robotics Institute, Carnegie Mellon University, September, 2005. Also, region growing is a known spatial segmentation algorithm. In another embodiment, the segmentation may involve dividing the picture or video frame into a number of square shaped but arbitrarily sized partitions. For example, the quadtree partitioning algorithm, well known in the art of image processing, is one way of achieving this.

Temporal segmentation involves associating or grouping together one or more video frames. Several different temporal segmentation algorithms, such as scene change detection and shot boundary detection, can be used to temporally segment video frames. Scene change detection involves grouping together all video frames that are part of the same scene. Once the scene (e.g., video frames including a particular sporting event) changes, the next grouping of video frames, i.e., the next scene, begins. Shot boundary detection involves grouping together all video frames that are part of the same shot. Once the shot (e.g., video frames including a particular person) changes, the next grouping of video frames, i.e., the next shot, begins. The context determines the scene and the content determines the shot.

Segmentation schemes such as those based on three-dimensional random-field/texture models can be utilized to achieve both spatial and temporal segmentation concurrently.

Compression algorithms that support the coding of square or rectangular shaped and uniformly sized partitions commonly utilize block transform coding tools (e.g., an 8x8 discrete cosine transform (DCT) algorithm) and block-based motion compensated temporal prediction (MCTP) algorithms (e.g., the MPEG-4 video compression algorithm). The use of an 8x8 DCT algorithm has been popular for the spatial compression of visual data. The 8x8 DCT algorithm can be shown to approximate the Karhunen-Loève Transform (KLT), which is the optimal linear transform in the mean squared error sense, for slowly varying (e.g., low detail) visual data; however, it is not very efficient for regions of a picture or video frame that involve texture. A texture can be described as a visual object which exhibits considerable detail / variation across multiple scales / resolutions. The use of a MCTP algorithm at macroblock sizes (e.g., 16x16) is good for rigid bodies or objects that experience translational motion. However, these algorithms are not adequate for non-rigid bodies (deforming bodies) or objects experiencing non-translational motion (e.g., texture in motion such as grass, flower fields, or tree branches with leaves) because their deformation and non-translational movement make it difficult to match features from one frame to another frame. Also, texture details and boundaries are not generally formed in the shape of rectangles. Therefore, these compression tools are popular but are not very good at compressing textures.

After the encoder 112 segments the source data into a number of partitions, each of the partitions is classified into one of a number of categories (step 320). In one embodiment, the number of categories is two, which includes a first category such as a hybrid (i.e., transform coding and MCTP based) coding category and a second category such as a texture coding category. The classification can be based on whether or not each particular partition includes texture. If the partition does not include texture, then the partition is classified into the first category. If the partition includes texture, then the partition is classified into the second category. One reason to distinguish between partitions that include texture and partitions that do not include texture is because certain algorithms are good at compressing texture through the use of parameterized models, and certain algorithms are not good at compressing texture. For example, texture modeling algorithms are good at compressing textures while general video or picture compression algorithms are not good at compressing textures but are good at compressing non-textures objects or images (steps 322 and 324). Therefore, it is inefficient and not practical to compress all partitions using the same algorithm. Better overall compression is achieved by classifying each partition based on whether or not texture is present in the partition.

Several different methods can be used to determine whether a particular partition includes texture. One exemplary method involves the encoder 112 applying a compression algorithm (e.g., a hybrid coding algorithm) to each of the partitions to determine whether the compression of the partition produces a desirable quality and bit rate operation point. That is, if (a) the bit rate is less than a bit rate threshold and (b) the quality is greater than a quality threshold, then the partition is classified into the first category. If either (a) or (b) is not met, then the partition is classified into the second category.

In another embodiment, if either (a) or (b) is not met, then the partition's content is evaluated for 'relevance' of its original detail. As a result of the 'relevance' analysis, if the partition, although it better fits to be considered as a texture, is concluded to convey significant information in its original detail, i.e., 'relevant', then it is classified into the first category. Otherwise, if the partition is concluded not to convey significant information in its original detail, i.e., 'irrelevant', then it is classified into the second category.

The bit rate threshold is a function of multiple factors such as source format (i.e., frame size and frame rate), type of application, content of the partition or frame, and (relative) size of the partition. In one embodiment, the bit rate threshold may be different for each partition or frame. The frame size depends on the spatial resolution of the image i.e., how many pixels per row and how many pixel rows exist in a frame. For example, the image may be in standard definition (SD, e.g., 720x486), high definition (HD, e.g., 1920x1080), video graphics array (VGA, e.g., 640x480), quarter VGA (QVGA, e.g., 320x240), etc. The type of application can be broadcast television, streaming video for mobile devices, streaming video over the Internet, etc. The content of the partition or frame is the determining factor of the complexity of the visual data in the partition or frame.

The quality threshold can be defined with respect to a subjective quality metric or an objective quality metric.

The subjective quality metric is a measure of the perceived quality which can be determined through different physcovisual tests. The subjective quality threshold can be set to, for example, a Mean Opinion Score (MOS) of 4.0 on a perceptive quality scale of 1 to 5 (with typical interpretation 1: "very annoying"/"bad", 2: "annoying"/"poor", 3: "slightly annoying"/"fair", 4: "perceptible but not annoying"/"good", 5: "imperceptible"/"excellent").

The objective quality metric may be derived using a number of different methods. One method of obtaining an objective quality metric is to determine a peak signal-to-noise ratio (PSNR) of one of the channels (e.g., the Y channel) for a particular partition or frame. The orig(i,j) represents the original image data (i.e., the original pixel value at the ith column and the jth row) and the comp(i,j) represents the compressed image data (i.e., the pixel value after compression at the ith column and the jth row). The PSNR can be determined using the following equation.

$$PSNR_Y = 20\log_{10}\left[\frac{255^2}{\dfrac{1}{row\ count\ x\ column\ count} \, x\sum_{j=1}^{cc}\sum_{i=1}^{rc}\left(orig_Y(i,j) - comp_Y(i,j)\right)^2}\right]$$

Then, the quality threshold can be set to, for example, 33 dB. In this example, if the quality (i.e., $PSNR_Y$) is greater than 33 dB, then the compressed image has a satisfactory / good quality.

Other objective metrics can be reference-based, reduced reference-based, or no-reference quantities combining deterministic or statistical measures targeting the quantification of blur, blockiness, ringing and other distortions which relate to and influence the similarity metrics used.

If the partition is classified into the first category; then the partition content is compressed or described using a video or picture compression algorithm or model (e.g., a hybrid coding algorithm) that provides good compression results for non-textured objects and images (step 322).

If the partition is classified into the second category, then the partition is compressed or described using an algorithm or model (e.g., a texture model) that provides good analysis and synthesis results for textured objects and regions (step 324). The algorithm or model may include one or more of the following: transform coding, spatial coding and temporal coding. For partitions classified into the second category, compression is achieved through lossless (exact) or lossy (approximate) representation and transmission of the model parameters. A texture model is a probabilistic mathematical model which is used to generate two dimensional random fields. The exact probabilistic nature of the output of such a model depends on the values of parameters which govern the model. Starting from a given two dimensional random field sample, using its data it is possible to estimate the parameter values of a texture model in an effort to tune the model to generate two dimensional random fields which look similar to the given sample. This parameter estimation process is known as model fitting.

Texture model based coding allows the number of bits required to satisfactorily represent textures, to be reduced greatly while still being able to reproduce a visually very similar texture. Texture models are mathematical tools capable of describing and producing textures. Some examples of texture models include Markov Random Fields (MRF), Gibbs Random Fields (GRF), Cellular Automata, and Fractals. The MRF provide a flexible and useful texture model and may be described to illustrate a texture model based coding.

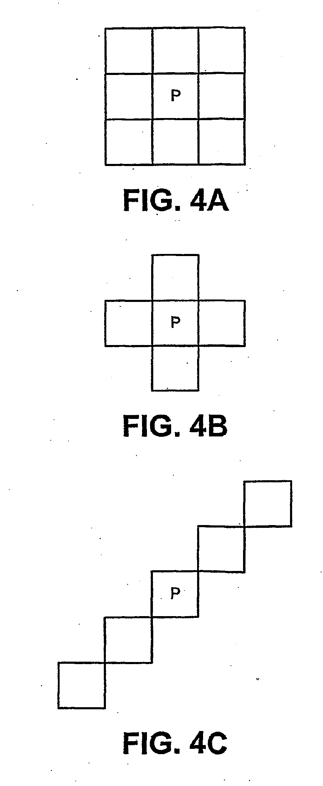

In MRF models, the probabilistic nature of each pixel is determined or influenced by the states of its neighboring pixels where the neighborhood N constitutes a tunable parameter of the model. The MRF models include a number of different tunable / adjustable parameters that control the strength, consistency, and direction of the clustering (i.e., grouping of similar brightness and colors) in the resulting image. For example, P is a set of sites or pixel locations, N is a neighborhood, $N_p$ is the corresponding neighborhood of pixel p, F is a set of random variables defined at the sites representing pixel values, and $F_p$ is a random variable defined at the position of pixel p. Examples of the neighborhood N include an 8 connected neighborhood (FIG. 4A), a 4 connected neighborhood (FIG. 4B), and an oblique neighborhood (FIG. 4C).

The Markov property, which gives this particular model its name, implies that $P(F_p = f \mid F(P \backslash \{p\})) = P(F_p = f \mid F(N_p))$. In this equation, $P$ denotes the probability measure and \ denotes the set difference operation. In other words, with respect to the probabilistic characterization of the pixel p, knowledge of the neighboring pixel values within the $N_p$ neighborhood of pixel p, is statistically equivalent to the knowledge of all pixel values within the entire set of sites P except for the pixel p.

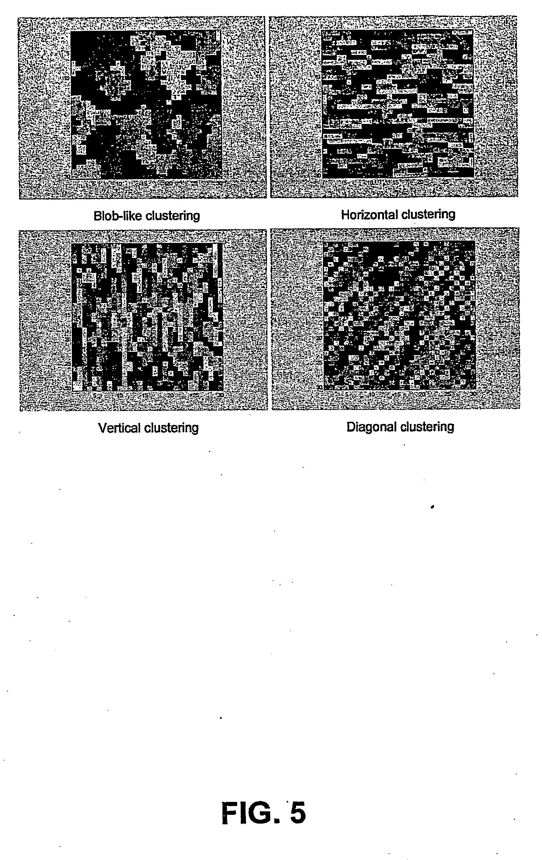

FIG. 5 is a picture illustrating four different realizations of a MRF model where each realization corresponds to a different neighborhood definition. MRF models can describe and generate a wide range of textures such as blurry or sharp, line-like, or blob-like random fields. The textures can be analyzed to determine or estimate their parameters for the MRF models.

Referring back to FIGS. 1 and 3, once the compression of the contents of the partitions is complete, the processor 108, using the I/O device 114, transmits compressed data corresponding to each of the partitions (step 326) and boundary information for each of the partitions (step 328) to the device 104. The compressed data is the source data after a compression algorithm or a parameterized model has been applied and in the latter case, parameters estimated and exactly or approximately represented. The boundary information includes information that is used to define the boundary for each of the number of partitions. For rectangular shaped and arbitrarily sized partitions, the boundary information includes the coordinates of the top left corner and the bottom right corner of each rectangle. Another example for conveying rectangular (square) shaped and arbitrarily sized partitions is the use of a quadtree representation. For arbitrarily shaped and arbitrarily sized partitions, the boundary information can be determined and represented by using, for example, Shipeng Li (Microsoft Research, China) and Iraj Sodagar (Sarnoff Corporation), "Generic, Scalable and Efficient Shape Coding for Visual Texture Objects in MPEG-4."

The processor 108, using the I/O device 114, transmits category information for each of the number of partitions to the device 104 (step 330). In the example above, the processor 108 may indicate that the particular partition belongs to the first category or the second category. The category information may also include the type of algorithm or model (e.g., hybrid coding algorithm or texture model) and the parameters for the model.

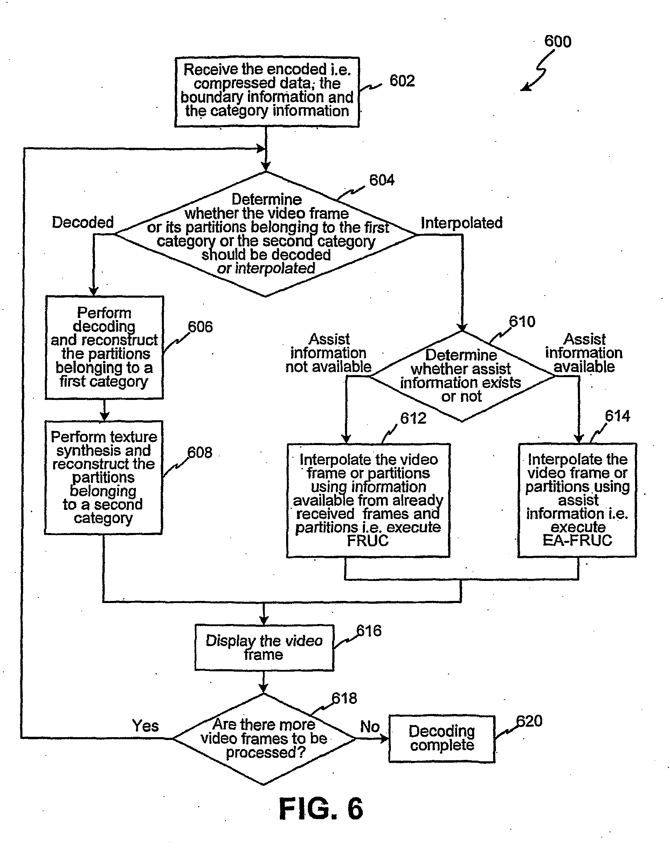

FIG. 6 is a flow chart illustrating a method 600 of decoding pictures and video frames. The device 104 receives the encoded/compressed data, the boundary information, and the category information for each of the partitions (step 602). The encoded/compressed data may include assist information for video frames and/or partitions belonging to a first category or a second category. The decoder 120 determines whether each video frame or partition belonging to the first category or the second category should be decoded or interpolated (step 604).

If the video frame or partition belonging to the first category or the second category is to be decoded then the decoder proceeds as follows. The decoder 120 decodes the encoded data and reconstructs each partition in the first category using the decoded data, the boundary information, and the category information (step 606). The decoder 120 performs texture synthesis and reconstructs each partition belonging to the second category using the decoded data, the boundary information, and the category information (step 608).

If the video frame or partition belonging to the first category or the second category is to be interpolated then the decoder proceeds as follows. The decoder 120 determines if assist information is available for the video frame or partition belonging to the first category or the second category which is to be interpolated (step 610). If assist information is not available, the decoder 120 can use FRUC to efficiently (i.e., with low computational complexity and high objective and subjective quality) interpolate the compressed source data using the already received and processed, i.e., decoded, compressed data, boundary information and category information (step 612). In one embodiment, all inferred partitions belonging to the first category or second category in a totally missing frame or within the missing region of a partially available frame, are interpolated. Interpolation schemes based on hybrid coding representations are known in the art, for example, are described in R. Castagno, P. Haavisto, and G. Ramponi, "A Method for Motion Adaptive Frame Rate Up-conversion," IEEE Transactions on Circuits and Systems for Video Technology, Volume 6, Issue 5, October 1996, Page(s) 436-446. If assist information is available, the decoder 120 can use EA-FRUC to efficiently (i.e., with low computational complexity and high objective and subjective quality) interpolate the compressed source data using the already received and processed, i.e., decoded, compressed data, boundary information, category information and assist information (step 614).

Once the decoding and/or interpolation is performed, the processor 116 can display the video frame (step 616). The processor 116 or the decoder 120 checks to see if there is more picture or video frame data to be processed (step 618). If there is more picture or video frame data to be processed, the decoder 120 loops back to the beginning of the process for decoding or interpolating and displaying a picture or a video frame (step 604). Otherwise, the current decoding task is finished (step 620).

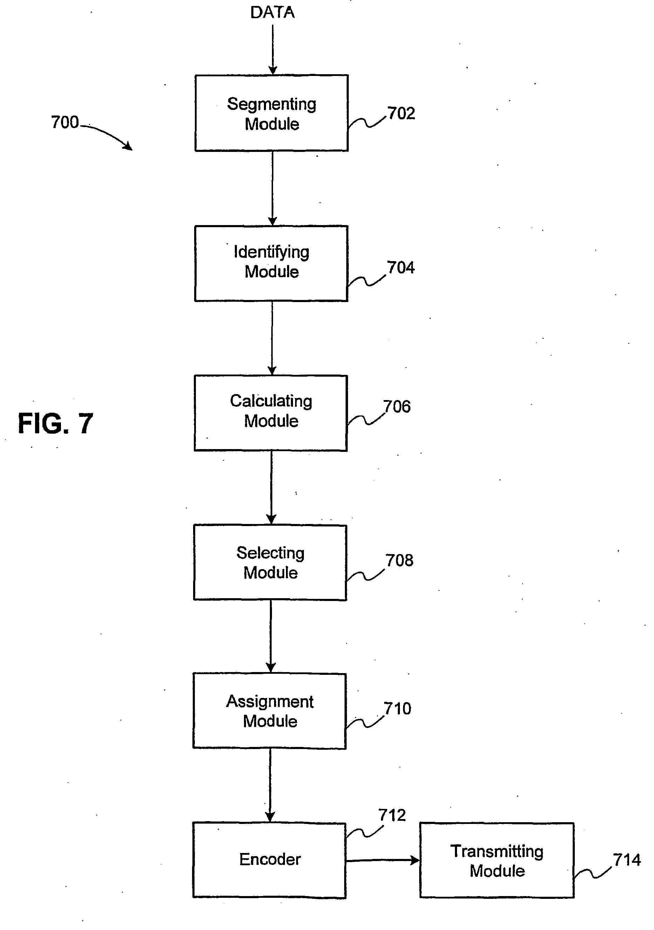

FIG. 7 is a block diagram of an apparatus 700 for processing multimedia data. The apparatus 700 may include a segmenting module 702 configured to segment data into a plurality of partitions, an identifying module 704 configured to identify the plurality of partitions that can be represented as textures, a calculating module 706 configured to calculate a similarity value between at least two partitions of adjacent video frames and a selecting module 708 configured to select a partition to encode based on the similarity value. The apparatus 700 may also include an assignment module 710 configured to assign each of the plurality of partitions to one of a plurality of categories comprising a first category and a second category, one or more encoders 712 configured to encode the plurality of partitions assigned to the first category using an algorithm and the plurality of partitions assigned to the second category using a texture model and a transmitting module 714 configured to transmit encoded data, boundary information and category information associated with the plurality of partitions. One or more modules may be added or deleted depending on the configuration of the apparatus 700. Each module may be implemented using hardware, software or combinations thereof The means for segmenting, identifying, calculating, selecting, assigning, encoding and transmitting may be implemented using hardware, software or combinations thereof. For example, the means may be implemented or performed with a general purpose processing device, a digital signal processing device (DSP), an application specific integrated circuit (ASIC), a field programmable gate array (FPGA) or other programmable logic device, discrete gate or transistor logic, discrete hardware components, or any combination thereof designed to perform the functions described herein.

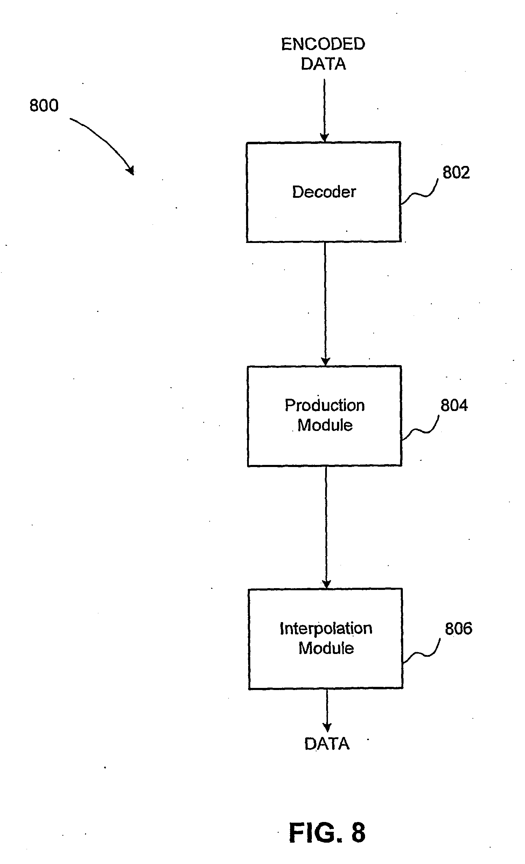

FIG. 8 is a block diagram of an apparatus 800 for processing multimedia data. The apparatus 800 may include a decoder 802 configured to decode a plurality of first partitions belonging to a first category using an algorithm and a plurality of second partitions belonging to a second category using a texture model, a production module 804 configured to create multimedia data using boundary information, the plurality of first partitions and the plurality of second partitions and an interpolation module 806 configured to interpolate the multimedia data to produce interpolated multimedia data. The means for decoding, creating and interpolating may be implemented using hardware, software or combinations thereof. For example, the means may be implemented or performed with a general purpose processing device, a digital signal processing device (DSP), an application specific integrated circuit (ASIC), a field programmable gate array (FPGA) or other programmable logic device, discrete gate or transistor logic, discrete hardware components, or any combination thereof designed to perform the functions described herein.

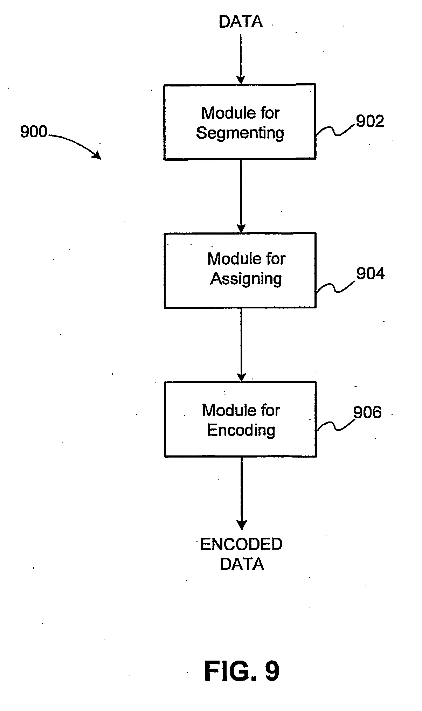

FIG. 9 is a block diagram 900 illustrating exemplary components for the means for apparatus for processing multimedia data. One or more modules shown in FIG. 9 may be used as the components for the means for segmenting, assigning and encoding. The modules may be implemented using hardware, software or combinations thereof. One or more modules may be added or deleted depending on the configuration of the apparatus 900. For example, the means may be implemented or performed with a general purpose processing device, a digital signal processing device (DSP), an application specific integrated circuit (ASIC), a field programmable gate array (FPGA) or other programmable logic device, discrete gate or transistor logic, discrete hardware components, software modules or any combination thereof designed to perform the functions described herein.

The apparatus 900 may include a module for segmenting 902 configured to segment data into a plurality of partitions, a module for assigning 904 configured to assign each of the plurality of partitions to one of a plurality of categories comprising a first category and a second category and a module for encoding 906 configured to encode the plurality of partitions assigned to the first category using an algorithm and the plurality of partitions assigned to the second category using a texture model.

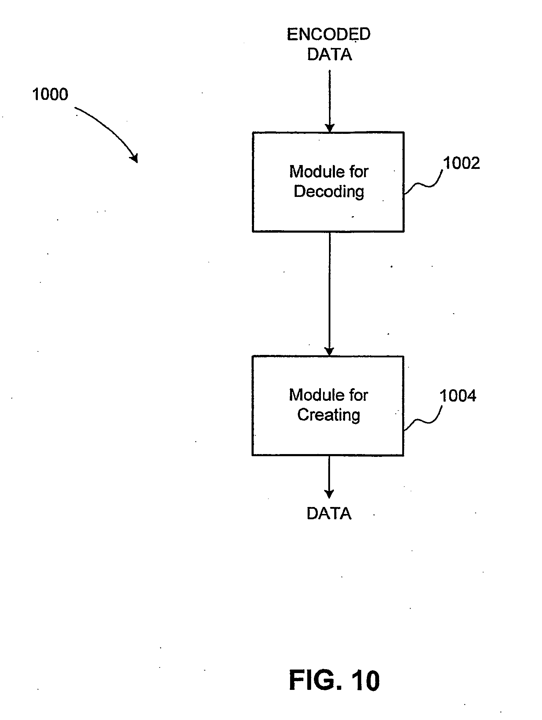

FIG. 10 is a block diagram illustrating exemplary components for the means for apparatus for processing multimedia data. One or more modules shown in FIG. 10 may be used as the components for the means for decoding and creating. The modules may be implemented using hardware, software or combinations thereof. One or more modules may be added or deleted depending on the configuration of the apparatus 1000. For example, the means may be implemented or performed with a general purpose processing device, a digital signal processing device (DSP), an application specific integrated circuit (ASIC), a field programmable gate array (FPGA) or other programmable logic device, discrete gate or transistor logic, discrete hardware components, software modules or any combination thereof designed to perform the functions described herein.

The apparatus 1000 may include a module for decoding 1002 configured to decode a plurality of first partitions belonging to a first category using an algorithm and a plurality of second partitions belonging to a second category using a texture model and a module for creating 1004 configured to create multimedia data using boundary information, the plurality of first partitions and the plurality of second partitions.

Those skilled in the art will appreciate that the various illustrative logical blocks, modules, circuits, and algorithms described in connection with the embodiments disclosed herein may be implemented as electronic hardware, computer software, or combinations of both. To illustrate this interchangeability of hardware and software, various illustrative components, blocks, modules, circuits, and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the embodiments disclosed herein may be implemented or performed with a general purpose processing device, a digital signal processing device (DSP), an application specific integrated circuit (ASIC), a field programmable gate array (FPGA) or other programmable logic device, discrete gate or transistor logic, discrete hardware components, or any combination thereof designed to perform the functions described herein. A general purpose processing device may be a microprocessing device, but in the alternative, the processing device may be any conventional processing device, processing device, microprocessing device, or state machine. A processing device may also be implemented as a combination of computing devices, e.g., a combination of a DSP and a microprocessing device, a plurality of microprocessing devices, one or more microprocessing devices in conjunction with a DSP core or any other such configuration.

The apparatus, methods or algorithms described in connection with the embodiments disclosed herein may be embodied directly in hardware, software, or combination thereof. In software the methods or algorithms may be embodied in one or more instructions that may be executed by a processing device. The instructions may reside in RAM memory, flash memory, ROM memory, EPROM memory, EEPROM memory, registers, hard disk, a removable disk, a CD-ROM, or any other form of storage medium known in the art. An exemplary storage medium is coupled to the processing device such the processing device can read information from, and write information to, the storage medium. In the alternative, the storage medium may be integral to the processing device. The processing device and the storage medium may reside in an ASIC. The ASIC may reside in a user terminal. In the alternative, the processing device and the storage medium may reside as discrete components in a user terminal.

The previous description of the disclosed embodiments is provided to enable any person skilled in the art to make or use the present disclosure. Various modifications to these embodiments will be readily apparent to those skilled in the art, and the generic principles defined herein may be applied to other embodiments without departing from the scope of the disclosure. Thus, the present disclosure is not intended to be limited to the embodiments shown herein but is to be accorded the widest scope consistent with the claims.

The described embodiments are to be considered in all respects only as illustrative and not restrictive and the scope of the invention is, therefore, indicated by the appended claims rather than by the foregoing description. All changes which come within the scope of the claims are to be embraced therein.

**Claims**

**1.** A method of processing multimedia data **characterized by** comprising:

calculating (306) a similarity value between at least two partitions of adjacent video frames;
performing scene analysis on each multimedia frame based on one or more pixel domain attributes or transform domain attributes or a segmentation scheme based on a texture model to temporally and/or spatially segment the multimedia data;
identifying which of the plurality of partitions can be represented by a texture model by applying an algorithm to each of the partitions to determine whether the compression of the partition produces a desirable quality and bit rate operation point;
assigning (320) each of the plurality of partitions to one of a plurality of different categories comprising a first category and a second texture category, based on whether the partition comprises texture;
selecting a partition to encode based on the similarity value;
encoding (322) the selected partition by using transform coding or hybrid coding if the selected partition has been assigned to the first category; and
fitting a texture model to the multimedia data of the selected partition if the selected partition has been assigned to the texture category, wherein the texture model is associated with at least one of Markov random fields, Gibbs random fields, Cellular Automata and Fractals.

2. The method of claim 1 further comprising transmitting encoded data (326), boundary information (328) and category information (330) associated with the plurality of partitions.

3. The method of claim 1 wherein each of the plurality of partitions has an arbitrary shape or an arbitrary size.

4. The method of claim 1 wherein calculating a similarity value comprises using at least one of a sum of absolute differences algorithm, a sum of squared differences algorithm and a motion compensated algorithm.

5. An apparatus for processing multimedia data **characterized by** comprising:

means for calculating a similarity value between at least two partitions of adjacent video frames;
means for performing scene analysis on each multimedia frame based on one or more pixel domain attributes or transform domain attributes or a segmentation scheme based on a texture model to temporally and/or spatially segment the multimedia data
means (704) for identifying which of the plurality of partitions can be represented by a texture model, said means adapted to apply an algorithm to each of the partitions to determine whether the compression of the partition produces a desirable quality and bit rate operation point;;
means (206, 710, 904) for assigning each of the plurality of partitions to one of a plurality of different categories comprising a first category and a texture category, based on whether the partition comprises texture; and
means for selecting a partition to encode based on the similarity value;
means (208, 210, 712, 906) for encodingthe selected partition by using transform coding or hybrid coding if the selected partition has been assigned to the first category; and
means for fitting a texture model to the multimedia data of the selected partition if the selected partition has been assigned to the texture category, wherein the texture model is associated with at least one of Markov random fields, Gibbs random fields, Cellular Automata and Fractals.

6. The apparatus of claim 5 further comprising means (212, 714) for transmitting encoded data, boundary information and category information associated with the plurality of partitions.

7. The apparatus of claim 5 wherein each of the plurality of partitions has an arbitrary shape or an arbitrary size.

8. The apparatus of claim 5 wherein the means for calculating a similarity value comprises using at least one of a sum of absolute differences algorithm, a sum of squared differences algorithm and a motion compensated algorithm.

9. A machine-readable medium comprising instructions that upon execution cause a machine to carry out the method of any of claims 1 to 4.

10. A processor for processing multimedia data, the processor being configured to carry out the method of any of claims I to 4.

11. A method of processing multimedia data encoded using the method of any of claims 1 to 4, comprising:

decoding (606) a plurality of first partitions belonging to a first category using transform coding or hybrid coding;
decoding (608) a plurality of second partitions belonging to a texture category using a texture model; and
creating multimedia data using boundary information, the plurality of first partitions and the plurality of second partitions.

12. The method of claim 11 further comprising interpolating (612, 614) the multimedia data to produce interpolated multimedia data.

13. The method of claim 12 further comprising interpolating the plurality of first partitions to produce a plurality of interpolated first partitions and the plurality of second partitions to produce a plurality of interpolated second partitions.

14. The method of claim 13 wherein the texture model is associated with at least one of Markov random fields, Gibbs random fields, Cellular Automata and Fractals.

15. A machine-readable medium comprising instructions that upon execution cause a machine to carry out the method of any of claims 11 to 14.

16. An apparatus for processing multimedia data encoded using the method of any of claims I to 4, the apparatus comprising:

means (1002) for decoding a plurality of first partitions belonging to a first category using transform coding or hybrid coding and a plurality of second partitions belonging to a texture category using a texture model; and
means (1004) for creating multimedia data using boundary information, the plurality of first partitions and the plurality of second partitions.

17. The apparatus of claim 16 further comprising means for interpolating the multimedia data to produce interpolated multimedia data.

18. The apparatus of claim 16 further comprising means for interpolating the plurality of first partitions to produce a plurality of interpolated first partitions and the plurality of second partitions to produce a plurality of interpolated second partitions.

19. The apparatus of claim 16 wherein the texture model is associated with at least one of Markov random fields, Gibbs random fields, Cellular Automata and Fractals.

20. A processor for processing multimedia data, the processor being configured to carry out the method of any of claims 11 to 14.

**Patentansprüche**

1. Ein Verfahren zum Prozessieren von Multimediadaten, das durch die folgenden Schritte **gekennzeichnet** ist:

Berechnen (306) eines Ähnlichkeitswerts zwischen wenigstens zwei Partitionen benachbarter Videoframes, beziehungsweise Videorahmen;
Ausführen einer Szenenanalyse auf jedem Multimediaframe basierend auf einem oder mehreren Pixeldomän-Attributen oder Transformationsdomän-Attributen oder einem Segmentierungsschema basierend auf einem Texturmodell um temporär und/oder räumlich die Multimediadaten zu segmentieren;
Identifizieren welche der Vielzahl von Partitionen durch ein Texturmodell dargestellt werden kann, durch das Anwenden eines Algorithmus auf jede der Partitionen, um zu bestimmen ob die Kompression der Partition eine gewünschte Qualität und einen Bitraten-Betriebspunkt erzeugt;
Zuordnen (320) jede der Vielzahl von Partitionen zu einer Vielzahl von verschiedenen Kategorien, die eine erste Kategorie und eine zweite Texturkategorie, darauf basierend ob eine Partition Textur aufweist, aufweisen;
Auswählen einer Partition um basierend auf dem Ähnlichkeitswert zu kodieren;
Kodieren (322) der ausgewählten Partition durch Verwenden von Transformkodierung oder Hybridkodierung, wenn die ausgewählte Partition der ersten Kategorie zugeordnet ist; und
Anpassen eines Texturmodells an die Multimediadaten der ausgewählten Partition wenn die ausgewählte Partition der Texturkategorie zugeordnet ist, wobei das Texturmodell wenigstens Markov Zufallsfeldern, einem Gibbs Zufallsfeldern, einem Cellular Automata oder Fraktalen zugeordnet ist.

2. Verfahren gemäß Anspruch 1, das ferner Übertragen von codierten Daten (326), Begrenzungsinformation (328) und Kategorieinformationen (330) aufweist, die mit der Vielzahl von Partitionen zugeordnet ist.

3. Verfahren gemäß Anspruch 1, wobei die Vielzahl von Partitionen eine beliebige Form oder Größe aufweisen.

4. Verfahren gemäß Anspruch 1, wobei das Berechnen eines Ähnlichkeitswerts das Verwenden von wenigstens einem Summe der absoluten Differenzen Algorithmus, einem Summe der quadrierten Differenzen Algorithmus oder einen Bewegungskompensations Algorithmus aufweist.

5. Vorrichtung zum Prozessieren von Multimediadaten, die durch das Folgende **gekennzeichnet** ist:

Mittel zum Berechnen eines Ähnlichkeitswerts zwischen wenigstens zwei Partitionen von benachbarten Videoframes;

Mittel zum Ausführen einer Szenenanalyse auf jedem Multimediaframe basierend auf einer oder mehrerer Pixeldomän-Attributen oder Transformationsdomän-Attributen oder einem Segmentierungsschema basierend auf einem Texturmodell, um temporär und/oder räumlich die Multimediadaten zu segmentieren

Mittel (704) zum Identifizieren welche der Vielzahl von Partitionen durch ein Texturmodell dargestellt werden kann, wobei das Mittel geeignet ist einen Algorithmus auf jede der Partitionen anzuwenden um zu bestimmen ob die Kompression der Partitionen eine gewünschte Qualität und einen Bitraten-Betriebspunkt erzeugt;

Mittel (206,710, 904) zum Zuweisen jeder der Vielzahl von Partitionen zu einer Vielzahl von verschiedenen Kategorien, die eine erste Kategorie und eine Texturkategorie aufweisen, darauf basierend ob die Partition Textur aufweist; und

Mittel zum Auswählen einer Partition zum Kodieren basierend auf dem Ähnlichkeitswert;

Mittel (208,210, 712,906) zum Kodieren der ausgewählten Partition durch Anwenden einer Transformkodierung oder Hybridkodierung, wenn die ausgewählte Partition der ersten Kategorie zugeordnet ist; und

Mittel zum Anpassen eines Texturmodells an die Multimediadaten der ausgewählten Partition wenn die ausgewählte Partition der Texturkategorie zugeordnet ist, wobei das Texturmodell wenigstens Markov Zufallsfeldern, einem Gibbs Zufallsfeldern, einem Cellular Automata oder Fraktalen zugeordnet ist.

6. Vorrichtung gemäß Anspruch 5, die ferner Mittel (212,714) zum Übertragen codierter Daten, Begrenzungsinformationen und Kategorieinformation aufweist, die mit der Vielzahl von Partitionen verbunden ist.

7. Vorrichtung gemäß Anspruch 5, wobei jede der Vielzahl von Partitionen eine beliebige Form oder Größe aufweist.

8. Vorrichtung gemäß Anspruch 5, wobei die Mittel zum Berechnen eines Ähnlichkeitswerts wenigstens das Verwenden eines Summe der absoluten Differenzen Algorithmus, eines Summe der quadrierten Differenzen Algorithmus oder eines Bewegungskompensations-Algorithmus aufweist.

9. Ein maschinenlesbares Medium das Anweisungen aufweist, die bei Ausführung eine Maschine dazu veranlassen das Verfahren nach einem der Ansprüche 1 bis 4 durchzuführen.

10. Ein Prozessor zum Prozessieren von Multimediadaten, wobei der Prozessor konfiguriert ist das Verfahren nach einem der Ansprüche 1 bis 4 auszuführen

11. Verfahren zum Prozessieren von Multimediadaten, die durch Verwendung des Verfahrens nach einem der Ansprüche 1 bis 4 codiert wurden, weist Folgendes auf:

Dekodieren (606) einer Vielzahl von ersten Partitionen, die zu einer ersten Kategorie gehören, durch Verwenden einer Transformkodierung oder Hybridkodierung;

Dekodieren (608) einer Vielzahl von zweiten Partitionen, die zu einer Texturkategorie gehören, durch Verwenden eines Texturmodells; und Erzeugen von Multimediadaten unter Verwendung von Begrenzungsinformationen, der Vielzahl von ersten Partitionen und der Vielzahl von zweiten Partitionen.

12. Verfahren gemäß Anspruch 11, das ferner das Interpolieren (612,614) der Multimediadaten aufweist, um interpolierte Multimediadaten zu erzeugen.

**13.** Verfahren gemäß Anspruch 12, das ferner das Interpolieren der Vielzahl von ersten Partitionen aufweist um eine Vielzahl von interpolierten ersten Partitionen zu erzeugen und die Vielzahl von zweiten Partitionen, um eine Vielzahl von interpolierten zweiten Partitionen zu erzeugen.

**14.** Verfahren gemäß Anspruch 13, wobei das Texturmodell wenigstens Markov Zufallsfeldern, einem Gibbs Zufallsfeld, einem Cellular Automata oder Fraktalen zugeordnet ist.

**15.** Ein maschinenlesbares Medium das Anweisungen aufweist, die bei Ausführung eine Maschine dazu veranlassen das Verfahren nach einem der Ansprüche 11 bis 14 auszuführen.

**16.** Eine Vorrichtung zum Prozessieren von Multimediadaten, die durch die Verwendung des Verfahrens nach einem der Ansprüche 1 bis 4 codiert wurden, wobei die Vorrichtung Folgendes aufweist:

Mittel (1002) zum Dekodieren einer Vielzahl von ersten Partitionen, die zu einer ersten Kategorie gehören, durch Verwenden einer Transformkodierung oder Hybridkodierung und einer Vielzahl von zweiten Partitionen, die zu einer Texturkategorie gehören, durch Verwenden eines Texturmodells; und
Mittel (1004) zum Erzeugen von Multimediadaten, unter Verwendung von Begrenzungsinformationen, der Vielzahl von ersten Partitionen und der Vielzahl von zweiten Partitionen.

**17.** Vorrichtung gemäß Anspruch 16, die ferner Mittel zum Interpolieren der Multimediadaten aufweist, um interpolierte Multimediadaten zu erzeugen.

**18.** Vorrichtung gemäß Anspruch 16, die ferner Mittel zum Interpolieren der Vielzahl von ersten Partitionen aufweist um eine Vielzahl von interpolierten ersten Partitionen zu erzeugen und die Vielzahl von zweiten Partitionen, um eine Vielzahl von interpolierten zweiten Partitionen zu erzeugen.

**19.** Vorrichtung gemäß Anspruch 16, wobei das Texturmodell wenigstens Markov Zufallsfeldern, einem Gibbs Zufallsfeldern, einem Cellular Automata oder Fraktalen zugeordnet ist.

**20.** Ein Prozessor zum Prozessieren von Multimediadaten, wobei der Prozessor konfiguriert ist um das Verfahren nach einem der Ansprüche 11 bis 14 auszuführen.

**Revendications**

**1.** Procédé de traitement de données multimédia, **caractérisé en ce qu'**il comprend les étapes suivantes :

calculer (306) une valeur de similarité entre au moins deux partitions d'images vidéo adjacentes ;
réaliser une analyse de scène sur chaque image multimédia sur la base d'un ou plusieurs attributs dans le domaine des pixels ou attributs dans le domaine transformé, ou un processus de segmentation sur la base d'un modèle de texture pour segmenter temporellement et/ou spatialement les données multimédia ;
identifier celles de la pluralité de partitions qui peuvent être représentées par un modèle de texture en appliquant un algorithme à chacune des partitions pour déterminer si la compression de la partition fournit un point de fonctionnement de qualité et de débit binaire souhaitables ;
affecter (320) chacune de la pluralité de partitions à l'une d'une pluralité de catégories différentes comprenant une première catégorie et une deuxième catégorie de texture, en fonction du fait que la partition comprend une texture ;
sélectionner une partition à coder sur la base de la valeur de similarité ;
coder (322) la partition sélectionnée en utilisant un codage par transformation ou un codage hybride si la partition sélectionnée a été affectée à la première catégorie ; et
adapter un modèle de texture aux données multimédia de la partition sélectionnée si la partition sélectionnée a été affectée à la catégorie de texture, le modèle de texture étant associé à au moins l'un de modèles à champs aléatoires de Markov, à champs aléatoires de Gibbs, à automates cellulaires et à fractales.

**2.** Procédé selon la revendication 1, comprenant en outre la transmission de données codées (326), d'informations de frontière (328) et d'informations de catégorie (330) associées à la pluralité de partitions.

**3.** Procédé selon la revendication 1, dans lequel chacune de la pluralité de partitions a une forme arbitraire ou une taille arbitraire.

4. Procédé selon la revendication 1, dans lequel le calcul d'une valeur de similarité comprend l'utilisation d'au moins l'un d'un algorithme de somme de différences absolues, d'un algorithme de somme de différences au carré et d'un algorithme compensé en mouvement.

5. Dispositif de traitement de données multimédia, **caractérisé en ce qu'**il comprend :

   des moyens pour calculer une valeur de similarité entre au moins deux partitions d'images vidéo adjacentes ;
   des moyens pour réaliser une analyse de scène sur chaque image multimédia sur la base d'un ou plusieurs attributs dans le domaine des pixels ou attributs dans le domaine transformé, ou un processus de segmentation sur la base d'un modèle de texture pour segmenter temporellement et/ou spatialement les données multimédia ;
   des moyens (704) pour identifier celles de la pluralité de partitions qui peuvent être représentées par un modèle de texture, lesdits moyens étant adaptés à appliquer un algorithme à chacune des partitions pour déterminer si la compression de la partition fournit un point de fonctionnement de qualité et de débit binaire souhaitables ;
   des moyens (206, 710, 904) pour affecter chacune de la pluralité de partitions à l'une d'une pluralité de catégories différentes comprenant une première catégorie et une deuxième catégorie de texture, en fonction du fait que la partition comprend une texture ; et
   des moyens pour sélectionner une partition à coder sur la base de la valeur de similarité ;
   des moyens (208, 210, 712, 906) pour coder la partition sélectionnée en utilisant un codage par transformation ou un codage hybride si la partition sélectionnée a été affectée à la première catégorie ; et
   des moyens pour adapter un modèle de texture aux données multimédia de la partition sélectionnée si la partition sélectionnée a été affectée à la catégorie de texture, le modèle de texture étant associé à au moins l'un de modèles à champs aléatoires de Markov, à champs aléatoires de Gibbs, à automates cellulaires et à fractales.

6. Dispositif selon la revendication 5, comprenant en outre des moyens (212, 714) pour transmettre des données codées, des informations de frontière et des informations de catégorie associées à la pluralité de partitions.

7. Dispositif selon la revendication 5, dans lequel chacune de la pluralité de partitions a une forme arbitraire ou une taille arbitraire.

8. Dispositif selon la revendication 5, dans lequel les moyens de calcul d'une valeur de similarité comprennent l'utilisation d'au moins l'un d'un algorithme de somme de différences absolues, d'un algorithme de somme de différences au carré et d'un algorithme compensé en mouvement.

9. Support lisible par une machine comprenant des instructions qui lors de leur exécution amènent une machine à exécuter le procédé de l'une quelconque des revendications 1 à 4.

10. Processeur pour le traitement de données multimédia, le processeur étant agencé pour exécuter le procédé de l'une quelconque des revendications 1 à 4.

11. Procédé de traitement de données multimédia codées en utilisant le procédé de l'une quelconque des revendications 1 à 4, comprenant les étapes suivantes :

   décoder (606) une pluralité de première partitions appartenant à une première catégorie en utilisant un codage par transformation ou un codage hybride ;
   décoder (608) une pluralité de deuxièmes partitions appartenant à une catégorie de texture en utilisant un modèle de texture ; et
   créer des données multimédia en utilisant des informations de frontière, la pluralité de premières partitions et la pluralité de deuxièmes partitions.

12. Procédé selon la revendication 11, comprenant en outre une interpolation (612, 614) des données multimédia pour produire des données multimédia interpolées.

13. Procédé selon la revendication 12, comprenant en outre une interpolation de la pluralité de premières partitions pour produire une pluralité de premières partitions interpolées et de la pluralité de deuxièmes partitions pour produire une pluralité de deuxièmes partitions interpolées.

**14.** Procédé selon la revendication 13, dans lequel le modèle de texture est associé à au moins l'un de modèles à champs aléatoires de Markov, à champs aléatoires de Gibbs, à automates cellulaires et à fractales.

**15.** Support lisible par une machine comprenant des instructions qui lors de leur exécution amènent une machine à exécuter le procédé de l'une quelconque des revendications 11 à 14.

**16.** Dispositif de traitement de données multimédia codées en utilisant le procédé de l'une quelconque des revendications 1 à 4, le dispositif comprenant :

   des moyens (1002) pour décoder une pluralité de premières partitions appartenant à une première catégorie en utilisant un codage par transformation ou un codage hybride et une pluralité de deuxièmes partitions appartenant à une catégorie de texture en utilisant un modèle de texture ; et
   des moyens (1004) pour créer des données multimédia en utilisant des informations de frontière, la pluralité de premières partitions et la pluralité de deuxièmes partitions.

**17.** Dispositif selon la revendication 16, comprenant en outre des moyens pour interpoler les données multimédia pour produire des données multimédia interpolées.

**18.** Dispositif selon la revendication 16, comprenant en outre des moyens pour interpoler la pluralité de premières partitions pour produire une pluralité de premières partitions interpolées et la pluralité de deuxièmes partitions pour produire une pluralité de deuxièmes partitions interpolées.

**19.** Dispositif selon la revendication 16, dans lequel le modèle de texture est associé à au moins l'un de modèles à champs aléatoires de Markov, à champs aléatoires de Gibbs, à automates cellulaires et à fractales.

**20.** Processeur pour traiter des données multimédia, le processeur étant agencé pour exécuter le procédé de l'une quelconque des revendications 11 à 14.

**FIG. 1**

EP 1 938 613 B1

200

Receiving
Module ⟋202

Segmenting
Module ⟋204

Assigning
Module ⟋206

First Encoding
Module ⟋208

Second Encoding
Module ⟋210

Transmitting
Module ⟋212

# FIG. 2

FIG. 3

- 302 Receive source data
- 304 Convert the source data from a first color space to a second color space
- 306 Calculate a similarity value using the source data that represents the similarity between adjacent video frames
- 308 Compare the similarity value to one or more thresholds
  - $S < T_1$
  - EA-FRUC $T_1 \leq S < T_2$
  - FRUC $S \geq T_2$
- 312 Generate assist information for a middle frame
- 314 Discard a middle frame
- 310 Are all video frames done — NO / YES
- 316 Go to next video frame
- 318 Segment the source data based on a pixel domain attribute or a transform domain attribute into a number of partitions
- 320 Classify each partition into one of a number of categories
- 322 Apply a video or picture compression algorithm to each partition belonging to a first category
- 324 Apply a texture model to each partition belonging to a second category
- 326 Transmit compressed data for each of the number of partitions
- 328 Transmit boundary information for each of the number of partitions
- 330 Transmit category information for each of the number of partitions

300

20

## FIG. 4A

## FIG. 4B

## FIG. 4C

Blob-like clustering

Horizontal clustering

Vertical clustering

Diagonal clustering

# FIG. 5

600

Receive the encoded i.e. compressed data; the boundary information and the category information — 602

Determine whether the video frame or its partitions belonging to the first category or the second category should be decoded or interpolated — 604

Decoded

Perform decoding and reconstruct the partitions belonging to a first category — 606

Perform texture synthesis and reconstruct the partitions belonging to a second category — 608

Interpolated

Assist information not available

Determine whether assist information exists or not — 610

Assist information available

Interpolate the video frame or partitions using information available from already received frames and partitions i.e. execute FRUC — 612

Interpolate the video frame or partitions using assist information i.e. execute EA-FRUC — 614

Display the video frame — 616

Are there more video frames to be processed? — 618

Yes

No

Decoding complete — 620

## FIG. 6

DATA

Segmenting Module — 702

Identifying Module — 704

Calculating Module — 706

Selecting Module — 708

Assignment Module — 710

Encoder — 712

Transmitting Module — 714

700

**FIG. 7**

ENCODED
DATA

800

Decoder                    802

Production
Module                     804

Interpolation
Module                     806

DATA

FIG. 8

DATA

Module for
Segmenting ～902

900

Module for
Assigning ～904

Module for
Encoding ～906

ENCODED
DATA

# FIG. 9

ENCODED
DATA

1000

Module for
Decoding

1002

Module for
Creating

1004

DATA

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6490320 B1

**Non-patent literature cited in the description**

- **C. Pantofaru ; M. Hebert.** A Comparison of Image Segmentation Algorithms. Carnegie Mellon University, September 2005

- **R. Castagno ; P. Haavisto ; G. Ramponi.** A Method for Motion Adaptive Frame Rate Up-conversion. *IEEE Transactions on Circuits and Systems for Video Technology,* October 1996, vol. 6 (5), 436-446